# EUROPÄISCHE PATENTANMELDUNG

(11) **EP 3 482 904 A1**
(43) Veröffentlichungstag der Anmeldung: **15.05.2019**
(21) Anmeldenummer: 17201523.2
(22) Anmeldetag: 14.11.2017
(51) Int. Cl.: B29C 44/46, B29K 75/00, B29C 44/60, B29K 105/00

(54) **VARIABLE VORRICHTUNG UND VERFAHREN ZUM AUFTRAGEN EINER SCHÄUMBAREN REAKTIONSMISCHUNG AUF EINE SICH BEWEGENDE DECKSCHICHT**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft eine Vorrichtung zum Auftragen einer schäumbaren Reaktionsmischung auf eine sich bewegende Deckschicht, umfassend einen Mischkopf (100) mit wenigstens zwei Eingängen (200, 300) und wenigstens einem Ausgang (400) zum Mischen von Komponenten, welche die schäumbare Reaktionsmischung ergeben und eine mit einem Ausgang des Mischkopfs verbundene Leitung (410, 420, 430, 440), durch welche die schäumbare Reaktionsmischung strömen kann und welche ein Austragselement (500) aufweist, aus der die schäumbare Reaktionsmischung auf die Deckschicht aufgetragen werden kann. Die Leitung (410, 420, 430, 440) ist eingerichtet, um wenigstens zwei Konfigurationen einzunehmen, welche sich in der Streckenlänge unterscheiden, welche die durch die Leitung strömende Reaktionsmischung zurücklegt. Die Erfindung betrifft ebenfalls ein Verfahren zum Auftragen einer schäumbaren Reaktionsmischung auf eine sich bewegende Deckschicht unter Einsatz einer erfindungsgemäßen Vorrichtung.

## Beschreibung

Die vorliegende Erfindung betrifft eine Vorrichtung zum Auftragen einer schäumbaren Reaktionsmischung auf eine sich bewegende Deckschicht, umfassend einen Mischkopf mit wenigstens zwei Eingängen und wenigstens einem Ausgang zum Mischen von Komponenten, welche die schäumbare Reaktionsmischung ergeben und eine mit einem Ausgang des Mischkopfs verbundene Leitung, durch welche die schäumbare Reaktionsmischung strömen kann und welche ein Austragselement aufweist, aus der die schäumbare Reaktionsmischung auf die Deckschicht aufgetragen werden kann. Die Erfindung betrifft ebenfalls ein Verfahren zum Auftragen einer schäumbaren Reaktionsmischung auf eine sich bewegende Deckschicht unter Einsatz einer erfindungsgemäßen Vorrichtung.

Verbundelemente aus einer Deckschicht und einem Isolierkern werden heutzutage in vielen Industriebereichen eingesetzt. Der grundlegende Aufbau solcher Verbundelemente besteht dabei aus einer Deckschicht, auf welche ein isolierend wirkender Werkstoff aufgebracht wird. Als Deckschichten können dabei beispielsweise Bleche aus beschichtetem Stahl, Edelstahl, Aluminium, Kupfer oder Legierungen der beiden letztgenannten eingesetzt werden. Darüber hinaus können auch Dämmplatten aus einer Kombination aus Deckschichten und Isolierkern hergestellt werden. Es können Kunststofffolien, Aluminiumfolien, Holz, Glasfaser- oder Mineralfaservliese sowie cellulosehaltige Materialien wie Papier, Pappe oder Pappmasche als Deckschichtmaterialien eingesetzt werden. Oft werden Mehrschichtdeckschichten aus z. B. Aluminium und Papier verwendet. Die Wahl des geeigneten Deckschichtmaterials hängt dabei von dem beabsichtigten Einsatzgebiet der Verbundelemente oder Dämmplatte und den sich daraus ergebenden Materialanforderungen ab. Als Isolierkern können insbesondere Schaumstoffe auf Basis von Polyurethan (PUR) und/oder Polyisocyanurat (PIR) eingesetzt werden.

Dämmplatten werden häufig im Haus- oder Wohnungs-Bau eingesetzt. Neben der Verwendung von Verbundelementen zur Isolierung von beispielsweise Kühlhäusern finden sie auch immer häufiger Anwendung als Fassadenelemente an Gebäuden oder als Elemente von Industrietüren wie beispielsweise Sektionaltore. Entsprechende Verbundelemente, im Folgenden auch als Sandwich-Verbundelemente bezeichnet, zeigen durch ihre Deckschicht eine dem verwendeten Material entsprechende Stabilität und Oberflächengestaltung, während der aufgebrachte Schaumstoff entsprechende wärmeisolierende Eigenschaften verleiht.

Zur Herstellung entsprechender Dämmplatten oder Verbundelemente wird auf eine bereitgestellte Deckschicht ein schäumendes Reaktionsgemisch mittels einer Auftragsvorrichtung aufgebracht. Hierzu werden zum Beispiel bei der Verwendung von Schaumstoffen auf Basis von Isocyanaten die entsprechenden Polyol-Komponenten und Isocyanat-Komponenten miteinander gemischt und auf die Deckschicht aufgetragen, auf welcher sie aufschäumen und aushärten.

Vorrichtungen und Verfahren zur Herstellung von Verbundelementen mit einer Deckschicht und einem Isolierkern werden beispielsweise in den folgenden Patentanmeldungen beschrieben: WO 2008/104492, WO 2015/150304, WO 2014/124824, CA 2880780, DE 20 2011 001109, US 2014/227441, EP 2 614 944, WO 2013/107739, EP 2 411 198, EP 2 393 643, EP 1 857 248, EP 1 593 438 und DE 2038253.

Im Stand der Technik ist unabhängig von den oben beschrieben unterschiedlichen Auftragstechniken bislang noch keine Lösung für den Fall bekannt, dass Anpassungen der Viskosität der reagierenden Schmelze ohne Rezepturänderung erforderlich sind. Die vorliegende Erfindung hat sich die Aufgabe gestellt, die Nachteile im Stand der Technik zumindest teilweise zu überwinden. Insbesondere hat sie sich die Aufgabe gestellt, eine Vorrichtung und ein Verfahren bereitzustellen, bei dem die Verweilzeit der Reaktionsmischung (die Zeit, die zwischen Herstellung der reagierenden Schmelze im Mischkopf und dem Auftragen derselben auf eine Deckschicht vergeht) veränderbar ist.

Diese Aufgabe wird gelöst durch eine Vorrichtung zum Auftragen einer schäumbaren Reaktionsmischung auf eine sich bewegende Deckschicht gemäß Anspruch 1 und einem Verfahren zum Auftragen einer schäumbaren Reaktionsmischung auf eine sich bewegende Deckschicht gemäß Anspruch 6. Vorteilhafte Weiterbildungen sind in den Unteransprüchen angegeben. Sie können beliebig kombiniert werden, sofern sich aus dem Kontext nicht eindeutig das Gegenteil ergibt.

Die Vorrichtung zum Auftragen einer schäumbaren Reaktionsmischung auf eine sich bewegende Deckschicht umfasst:
- einen Mischkopf mit wenigstens zwei Eingängen und wenigstens einem Ausgang zum Mischen von Komponenten, welche die schäumbare Reaktionsmischung ergeben und
- eine mit einem Ausgang des Mischkopfs verbundene Leitung, durch welche die schäumbare Reaktionsmischung strömen kann und welche ein Austragselement aufweist, aus der die schäumbare Reaktionsmischung auf die Deckschicht aufgetragen werden kann.

Die Leitung ist eingerichtet, um wenigstens zwei Konfigurationen einzunehmen, welche sich in der Streckenlänge unterscheiden, welche die durch die Leitung strömende Reaktionsmischung zurücklegt.

Das Verfahren zum Auftragen einer schäumbaren Reaktionsmischung auf eine sich bewegende Deckschicht umfasst die Schritte:
- Bereitstellen einer Auftragvorrichtung, wobei die Auftragvorrichtung eine Vorrichtung gemäß der vorliegenden Erfindung ist;
- Auswählen der schäumbaren Reaktionsmischung; wobei die Reaktionsmischung eine zeitliche Veränderung ihrer Viskosität aufweist;
- Bestimmen einer gewünschten Viskosität der Reaktionsmischung zum Zeitpunkt des Auftragens auf die Deckschicht;
- Konfigurieren der Auftragvorrichtung, so dass die Streckenlänge der Leitung mit der gewünschten Viskosität der Reaktionsmischung zum Zeitpunkt des Auftragens auf die Deckschicht korreliert;
- Bereitstellen der Reaktionsmischung in dem Mischkopf der Auftragvorrichtung;
- Bewegen der Reaktionsmischung von dem Mischkopf durch die Leitung auf das Austragselement der Auftragvorrichtung heraus auf die Deckschicht.

Als Reaktionsmischung kommt insbesondere eine zu einem Polyurethan- und/oder Polyisocyanuratschaum reagierende Mischung in Frage. Als Deckschicht oder Substrat eignen sich beispielsweise Metall-Folien, insbesondere Aluminium-Folien, Mehrschichtdeckschichten, z. B. aus Aluminium und Papier, und Kunststoff-Folien. Weiterhin können Vliese eingesetzt werden. Die Breite der Deckschicht ist grundsätzlich nicht beschränkt. Beispielsweise kann die Deckschicht eine Breite zwischen 1000 und 1300 mm aufweisen, aber auch 2400 mm Breite sind möglich. Die Deckschichtgeschwindigkeit beträgt beispielsweise ≥ 1 bis ≤ 70 Meter pro Minute, vorzugsweise ≥ 15 Meter pro Minute, mehr bevorzugt ≥ 30 Meter pro Minute.

Ein Bestandteil der Vorrichtung ist ein Mischkopf, welcher wenigstens zwei Eingangsströme mischt und welchen das Gemisch als wenigstens ein Ausgangsstrom verlässt. Der Mischkopf kann ein Statikmischer sein. Besonders bevorzugt sind die in der Polyurethantechnologie bekannten Hochdruck-Mischköpfe.

Der Ausgangsstrom verlässt den eigentlichen Mischkopf und befindet sich dann in einer Leitung mit einem Austragselement. Letztendlich verlässt der Ausgangsstrom die erfindungsgemäße Vorrichtung über dieses Austragselement und kontaktiert die Deckschicht. Das Austragselement kann beispielsweise eine einfache Austragsöffnung, eine Gießharke oder eine Breitschlitzdüse sein. Die Leitung kann sowohl starr als auch biegbar sein und ist vorzugsweise aus einem thermoplastischen Polymeren aufgebaut wie beispielsweise Nylon-6, Nylon-6,6, Polyethylen, Polypropylen, Polyvinylchlorid, etc.

Die Länge der Strecke, welche der Ausgangsstrom in der Leitung von dem Ausgang des Mischkopfes bis zum Austragselement zurücklegt, ergibt zusammen mit der Strömungsgeschwindigkeit des Ausgangsstroms in der Leitung eine Verweilzeit der Reaktionsmischung in der Leitung, während derer die Reaktion im Reaktionsgemisch schon ablaufen kann. Dann kann durch die Variabilität der Streckenlänge beeinflusst werden, mit welchem Reaktionsfortschritt und damit auch mit welcher Viskosität das Reaktionsgemisch auf die Deckschicht aufgetragen wird.

Beispielsweise kann es vorteilhaft sein, die apparente Startzeit eines Polyurethanschaumes zu verkürzen, wobei mit apparenter Startzeit der Zeitraum gemeint ist, der vom Austrag der reagierenden Polyurethan-Reaktionsmischung aus dem Auftragselement bis zum Beginn des Aufschäumvorganges vergeht. Dies wird entsprechend der vorliegenden Erfindung dadurch erreicht, dass die reagierende Polyurethanschmelze in einem Verweilzeitelement (der Leitung mit variabler Länge) vorreagiert wird und sie deswegen mit bereits erhöhter Viskosität, beziehungsweise mit apparent verkürzter Startzeit, auf Deckschichten aufgetragen wird.

Von besonderem Vorteil ist ein solches Vorgehen insbesondere dann, wenn profilierte Bleche ohne Materialanhäufungen in den Vertiefungen (Sicken) beschäumt werden sollen.

Weiterhin können Beschäumungen diffusionsoffener Deckschichter, beispielsweise Mineralvliese, mit dem Effekt einer verminderten Durchdringung vorteilhaft beschäumt werden.

Die Verwendung erfindungsgemäßer Verweilzeitstrecken ermöglicht des Weiteren die Einsparung von Katalysatoren.

Das erfindungsgemäße Verfahren wird mittels der erfindungsgemäßen Auftragvorrichtung durchgeführt. Die Korrelation der Streckenlänge der Leitung mit der gewünschten Viskosität der Reaktionsmischung kann erfolgen, indem zuvor (beispielsweise in einem Reaktionsviskosimeter) die zeitliche Änderung der Viskosität nach Kombinieren der Edukte zur Reaktionsmischung aufgezeichnet wird. In Kenntnis des Stofftransports dm/dt in der Leitung kann dann leicht die benötigte Streckenlänge ermittelt werden.

In einer Ausführungsform des erfindungsgemäßen Verfahrens umfasst die Reaktionsmischung ≥ 20 Gewichts-% einer Komponente, welche eine bei 25 °C gemessene Viskosität (Rotationsviskosimetrie gemäß DIN 53019) von ≤ 2500 mPas, bevorzugt ≤ 1500 mPas, besonders bevorzugt ≤ 700 mPas und ganz besonders bevorzugt ≥ 50 mPas bis ≤ 650 mPas aufweist. Die vorliegende Erfindung ermöglicht es insbesondere, niederviskose Polyole und/oder niederviskose Polyisocyanate ohne Anpassung der Rezeptur vorteilhaft einsetzen zu können.

In einer weiteren Ausführungsform des erfindungsgemäßen Verfahrens umfasst die Reaktionsmischung ein Polyol, ein Polyisocyanat, gegebenenfalls Additive wie z. B. Stabilisatoren und Katalysatoren, gegebenenfalls ein oder mehrere Flammschutzmittel und ein (oder mehrere) Treibmittel.

Vorzugsweise ist das Polyol ausgewählt aus der Gruppe der Polyetherpolyole, Polyesterpolyole, Polycarbonatpolyole und /oder Polyetheresterpolyole. Die OH-Zahl des eingesetzten Polyols oder der eingesetzten Polyole kann beispielsweise > 100 mg KOH/g bis < 800 mg KOH/g betragen und die durchschnittliche OH-Funktionalität des eingesetzten Polyols oder der der eingesetzten Polyole ist ≥ 2. Die OH-Zahl gibt im Falle eines einzelnen zugesetzten Polyols dessen OH-Zahl an. Im Falle von Mischungen wird die mittlere OH-Zahl angegeben. Dieser Wert kann anhand von DIN 53240 bestimmt werden. Die durchschnittliche OH-Funktionalität der Polyole liegt beispielsweise in einem Bereich von ≥ 2 bis < 6.

Verwendbare Polyetherpolyole sind beispielsweise Polytetramethylenglykolpolyether, wie sie durch Polymerisation von Tetrahydrofuran mittels kationischer Ringöffnung erhältlich sind. Ebenfalls geeignete Polyetherpolyole sind Additionsprodukte von Styroloxid, Ethylenoxid, Propylenoxid, Butylenoxid und oder Epichlorhydrin an di- oder polyfunktionelle Startermoleküle. Meistens werden Polyetherpolyole aus überwiegend Propylenoxid sowie Ethylenoxid verwendet.

Geeignete Startermoleküle sind zum Beispiel Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Verwendbare Polyesterpolyole sind unter Anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure oder Trimellithsäure eingesetzt werden. Als Säurequelle können auch die entsprechenden Anhydride verwendet werden. Selbstverständlich können die Polyole ebenso wie die Polycarbonsäuren biogenen Ursprungs sein und/oder auf fementativem Weg erhalten worden sein.

Werden Polyole und/oder Polycarbonsäuren mit Funktionalitäten > 2 bei der Synthese der Polyesterpolyole mitverwendet, können zur Anpassung der Funktionalität auch monofunktionelle Carbonsäuren, beispielsweise Fettsäuren, etwa Ölsäure und monofunktionelle Alkohole wie z.B. Oleyl- oder Stearylalkohol anteilig eingesetzt werden. Hydroxycarbonsäuren, die als Reaktionsteilnehmer bei der Herstellung eines Polyesterpolyols mit endständigen Hydroxylgruppen mitverwendet werden können, sind beispielsweise Ricinolsäure, Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen oder aus Kohlendioxid und Alkylenoxiden erhältlich.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art. Statt oder zusätzlich zu reinen Polycarbonatdiolen können auch Polyether-Polycarbonatdiole eingesetzt werden.

Verwendbare Polyetheresterpolyole sind solche Verbindungen, die Ethergruppen, Estergruppen und OH-Gruppen enthalten. Organische Dicarbonsäuren sind zur Herstellung der Polyetheresterpolyole geeignet, vorzugsweise aliphatische Dicarbonsäuren mit ≥ 3 bis ≤ 16 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isophthalsäure genannt. Als Derivate dieser Säuren können beispielsweise deren Anhydride sowie deren Ester und Halbester mit niedermolekularen, monofunktionellen Alkoholen mit ≥ 1 bis ≤ 4 Kohlenstoffatomen eingesetzt werden.

Beispiele von geeigneten Polyisocyanaten sind 1,4-Butylendiisocyanat, 1,5-Pentandiisocyanat, 1,6-Hexamethylendiisocyanat (HDI), Isophorondiisocyanat (IPDI), 2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclobexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) oder höhere Homologe (polymeres MDI, pMDI), 1,3- und/oder 1,4-Bis-(2-isocyanato-prop-2-yl)-benzol (TMXDI), 1 ,3-Bis-(isocyanatomethyl)benzol (XDI), sowie Alkyl-2,6-diisocyanatohexanoate (Lysindiisocyanate) mit C1 bis C6-Alkylgruppen.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Es ist möglich, dass im Reaktionsgemisch das mit dem Faktor 100 multiplizierte Verhältnis von Anzahl der NCO-Gruppen im Isocyanat und Anzahl der gegenüber Isocyanaten reaktiven Gruppen, bezeichnet als Kennzahl (Index), imBereich von 110 bis 600 liegt. Bevorzugt zwischen 115 und 400. Diese Kennzahl kann auch in einem Bereich von > 180:100 bis < 330:100 oder aber auch von > 90:100 bis < 140:100 liegen.

Geeignete Treibmittel können physikalische Treibmittel wie n-Pentan, Cyclopentan, Isopentan, Propan oder Butan oder Blends davon oder Kohlendioxid sein. Auch fluorierte Olefine wie z.B. Chemours 1100 oder Solstice LBA oder Additive wie FA 188 von 3M können verwendet werden. Ferner können chemische Treibmittel wie Wasser oder Ameisensäure eingesetzt werden. Eine Kombination von physikalischen und chemischen Treibmitteln ist ebenfalls möglich.

In einer weiteren Ausführungsform des erfindungsgemäßen Verfahrens enthält die Reaktionsmischung einen Aminkatalysator und für einen vorbestimmten Wert der Viskosität der Reaktionsmischung beim Verlassen des Austragselements beträgt der Gehalt des Aminkatalysators in der Reaktionsmischung für die Konfiguration der Leitung mit der längesten Streckenlänge ≤ 90% (vorzugsweise ≤ 85%, mehr bevorzugt ≤ 80%) des Gehalts in der Reaktionsmischung für die Konfiguration der Leitung mit der kürzesten Streckenlänge.

Die Aminkatalysatoren entstammen vorzugsweise aus der Gruppe der aliphatischen tertiären Amine und der quaternären Ammoniumsalze.

Geeignete Aminkatalysatoren sind beispielsweise Pentamethyldiethylentriamin, N,N-Dimethylcyclohexylamin oder die von Air Products/Evonik unter den Handelsnamen Dabco TMR-3, -4 und -5 vertriebenen quarternären Ammoniumsalze ebenso wie zum Beispiel Triethylendiamin, Triethylamin, Tributylamin, N,N,N',N'-Tetramethylethylendiamin, N,N,N',N'-Tetramethylbutandiamin, Tetramethylhexandiamin, N-Methylmorpholin, N-Ethylmorpholin, N-Cycloheylmorpholin, Triethanolamin, N-Methyldiethanolamin, N-Ethyldiethanolamin, Triisopropanolamin.

Vorzugsweise kommt im Rahmen der vorliegenden Erfindung ein gegenüber einer Auftragstechnik ohne Verweilzeitelement eine verminderte Einsatzmenge der Katalysatoren Pentamethyldiethylentriamin, N,N-Dimethylcyclohexylamin oder die von Air Products/Evonik unter den Handelsnamen Dabco TMR-3, -4 und -5 vertriebenen quarternären Ammoniumsalze in Betracht.

Weiterhin kann im Fall von Desmorapid DB (N,N,-Dimethylbenzylamin) der Gehalt für die längste Konfiguration 90% des Gehalts in der kürzesten Konfiguration betragen, im Fall des DMCHA (N,N-Dimethylcyclohexylamin) 80% und des Desmorapid PV (Bis (2-dimethylaminoethyl)methylamin) 66%.

In einer weiteren Ausführungsform des erfindungsgemäßen Verfahrens wird während des Auftragens der Reaktionsmischung die Streckenlänge der Leitung verändert. So kann im kontinuierlichen Betrieb des Verfahrens die Verweilzeit angepasst werden.

Die vorliegende Erfindung wird anhand der nachfolgenden Figuren näher erläutert, ohne jedoch darauf beschränkt zu sein. Es zeigen:
- FIG. 1: eine erste erfindungsgemäße Vorrichtung in einer ersten Konfiguration
- FIG. 2: die erste erfindungsgemäße Vorrichtung in einer zweiten Konfiguration
- FIG. 3: eine zweite erfindungsgemäße Vorrichtung in einer ersten Konfiguration
- FIG. 4: die erste erfindungsgemäße Vorrichtung in einer zweiten Konfiguration
- FIG. 5: ein Detail einer dritten erfindungsgemäßen Vorrichtung in einer ersten Konfiguration
- FIG. 6: ein Detail der dritten erfindungsgemäßen Vorrichtung in einer zweiten Konfiguration

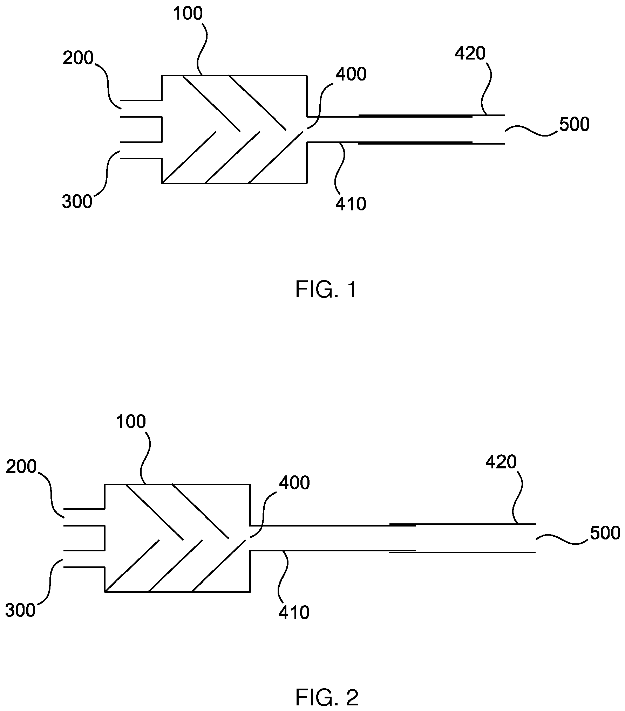

Gemäß einer Ausführungsform der erfindungsgemäßen Vorrichtung ist die Leitung eingerichtet, um stufenlos veränderliche Streckenlängen einzunehmen. Dieses kann zum Beispiel dadurch erfolgen, dass die Leitung einen inneren Teil und einen koaxial über dem inneren Teil befindlichen äußeren Teil aufweist und der innere und der äußere Teil entlang ihrer gemeinsamen Achse gegeneinander beweglich sind. Solch eine Variante ist in FIG. 1 und 2 dargestellt.

FIG. 1 zeigt eine erste erfindungsgemäße Vorrichtung mit einem Mischkopf 100, welcher zwei Eingänge 200, 300 sowie einen Ausgang 400 aufweist. Der Mischkopf ist hier als Statikmischer ausgeführt und kann beispielsweise zum Mischen eines Polyolstroms und eines Isocyanatstroms unter Erhalt eines zu einem PUR/PIR-Schaum reagierenden Reaktionsgemisches verwendet werden. Die mit dem Ausgang 400 des Mischkopfs 100 verbundene Leitung weist einen inneren Teil 410 auf, welcher die aus dem Ausgang 400 strömende Reaktionsmischung zuerst aufnimmt. Koaxial auf den inneren Teil 410 ist ein äußerer Teil 420 aufgesteckt. Die Teile 410 und 420 sind entlang ihrer gemeinsamen Achse beweglich.

Optionale, nicht dargestellte Dichtungen können den Austritt von Reaktionsmischung durch einen eventuell vorliegenden, zwischen Teilen 410 und 420 befindlichen Spalt verhindern. Das dem Ausgang 400 entgegengesetzte Ende 500 des äußeren Teils 420 bildet das Austragselement der Vorrichtung. Alternativ kann am Ende 500 ein Austragselement wie eine Gießharke oder eine Breitschlitzdüse angebracht werden.

Die Vorrichtung in FIG. 1 ist für eine vergleichsweise kurze Verweilstrecke konfiguriert. Durch Auseinanderziehen des äußeren Teils 420, wie in FIG. 2 dargestellt, lässt sich eine längere Verweilstrecke realisieren. Es ist ohne Weiteres einzusehen, dass die Verweilstrecke stufenlos eingestellt werden kann.

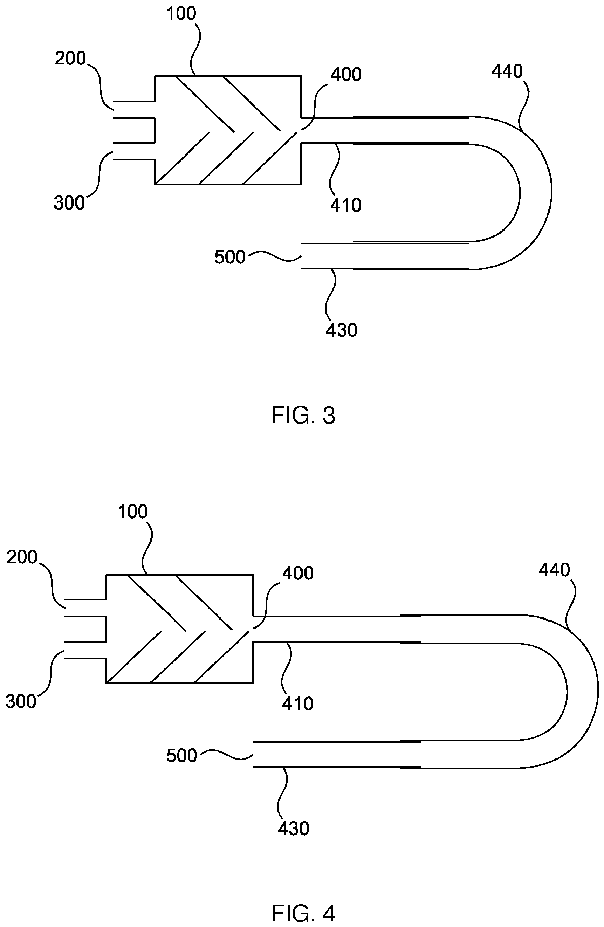

FIG. 3 zeigt zweite erste erfindungsgemäße Vorrichtung mit einem Mischkopf 100, welcher zwei Eingänge 200, 300 sowie einen Ausgang 400 aufweist. Der Mischkopf ist hier als Statikmischer ausgeführt und kann beispielsweise zum Mischen eines Polyolstroms und eines Isocyanatstroms unter Erhalt eines zu einem PUR/PIR-Schaum reagierenden Reaktionsgemisches verwendet werden. Die mit dem Ausgang 400 des Mischkopfs 100 verbundene Leitung weist einen inneren Teil 410 auf, welcher die aus dem Ausgang 400 strömende Reaktionsmischung zuerst aufnimmt. Koaxial auf den inneren Teil 410 ist ein gerader Abschnitt eines äußeren Teil 440 aufgesteckt. Die Teile 410 und 440 sind entlang ihrer gemeinsamen Achse beweglich. Der äußere Teil ist U-förmig gebogen und weiterhin auf den zweiten inneren Teil 430 der Leitung koaxial aufgesteckt. Diese Anordnung ist mit der in einer Zugposaune vergleichbar.

Optionale, nicht dargestellte Dichtungen können den Austritt von Reaktionsmischung durch einen eventuell vorliegenden, zwischen Teilen 410, 430 und 440 befindlichen Spalt verhindern. Das Ende 500 des zweiten inneren Teils 430 bildet das Austragselement der Vorrichtung. Alternativ kann am Ende 500 ein Austragselement wie eine Gießharke oder eine Breitschlitzdüse angebracht werden.

FIG. 4 zeigt die Vorrichtung aus FIG. 3, bei der die Verweilstrecke durch Bewegen des äußeren Teils 440 vergrößert wurde.

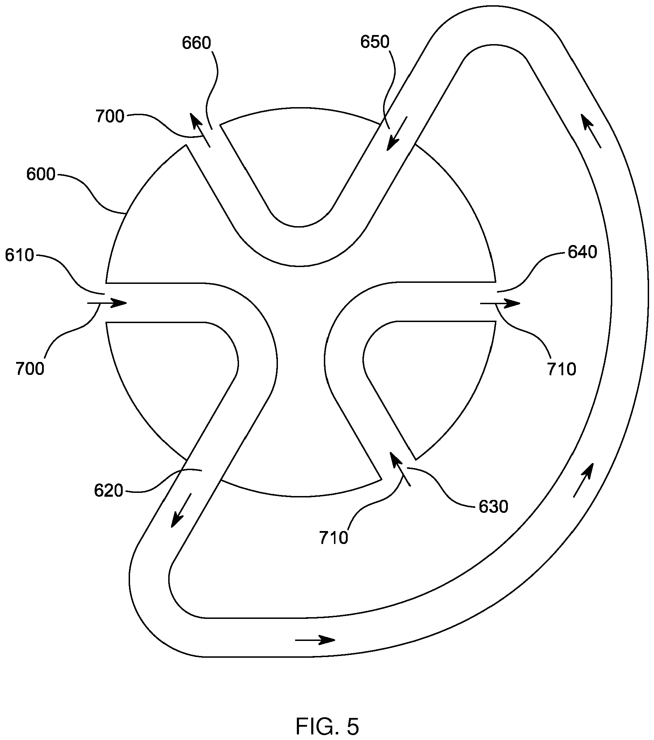

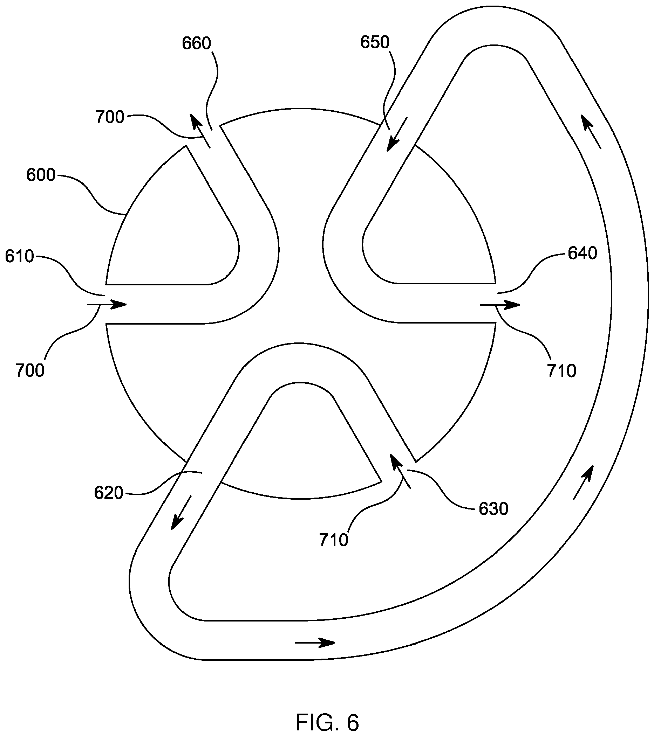

Gemäß einer weiteren Ausführungsform der erfindungsgemäßen Vorrichtung ist die Leitung eingerichtet, um eine Mehrzahl (beispielsweise 2, 3, 4, 5, 6 oder 7) von diskreten Konfigurationen mit jeweils unterschiedlicher Streckenlänge einzunehmen. Dieses kann zum Beispiel dadurch erfolgen, dass die Vorrichtung wenigstens teilweise durch ein Mehrwegeventil verläuft. Solch eine Variante ist in FIG. 5 und 6 dargestellt.

FIG. 5 zeigt als Detail einer erfindungsgemäßen Vorrichtung ein 6-Wege-Ventil oder 6-Wege-Hahn. Das Ventil weist drei Paare von durch Kanäle miteinander fluidisch verbundenen Öffnungen auf: Öffnungen 610/620, Öffnungen 630/640 und Öffnungen 650/660.

In der in FIG. 5 gezeigten Konfiguration einer langen Verweilstrecke tritt Stoffstrom 700, welcher mittelbar oder unmittelbar aus dem Mischkopf stammt, in den Eingang 610 ein, tritt aus dem Eingang 620 aus, wandert durch die außenliegende Leitung bis zum Eingang 650 und tritt aus Eingang 660 aus dem Ventil aus, um über ein Austragelement auf die Deckschicht im Verfahren aufgetragen zu werden. Der Stoffstrom 710 kann beispielsweise ein Lösungsmittel zum Spülen des Ventils sein und tritt durch Eingang 630 in das Ventil und durch Eingang 640 aus dem Ventil wieder heraus.

Zur Verkürzung der Verweilstrecke kann das in FIG. 5 gezeigte Ventil um 60 Grad gedreht werden, wobei sich die Lage der außenliegenden, vormals vom Stoffstrom 700 durchflossenen Leitung nicht verändert. Diese neue Konfiguration ist in FIG. 6 gezeigt.

In FIG. 6 nimmt der Stoffstrom 700 mit dem Reaktionsgemisch den kurzen Weg durch Eingang 610 hinein und aus Eingang 660 aus dem Ventil heraus. Stoffstrom 710, beispielsweise wieder in Form eines Lösungsmittels zum Spülen, tritt durch Eingang 630 in das Ventil ein, verlässt dieses durch Eingang 620, durchströmt die außenliegende Leitung, tritt wieder durch Eingang 650 in das Ventil ein und verlässt dieses schließlich durch Eingang 640.

Selbstverständlich können auch mehrere Mehr-Wege-Hähne in Reihe geschaltet werden, wodurch ein Zurückspringen auf eine Konstellation ohne Verweilzeitelement vermieden wird.

Selbstverständlich können weiterhin mit dem Mehr-Wege-Hahn auch Ausführungsformen wie im Zusammenhang mit FIG. 1 bis 4 beschrieben kombiniert werden.

## Patentansprüche

1. Vorrichtung zum Auftragen einer schäumbaren Reaktionsmischung auf eine sich bewegende Deckschicht, umfassend:
- einen Mischkopf (100) mit wenigstens zwei Eingängen (200, 300) und wenigstens einem Ausgang (400) zum Mischen von Komponenten, welche die schäumbare Reaktionsmischung ergeben und
- eine mit einem Ausgang (400) des Mischkopfs (100) verbundene Leitung (410, 420, 430, 440), durch welche die schäumbare Reaktionsmischung strömen kann und welche ein Austragselement (500) aufweist, aus der die schäumbare Reaktionsmischung auf die Deckschicht aufgetragen werden kann,
**dadurch gekennzeichnet, dass**
die Leitung (410, 420, 430, 440) eingerichtet ist, um wenigstens zwei Konfigurationen einzunehmen, welche sich in der Streckenlänge unterscheiden, welche die durch die Leitung strömende Reaktionsmischung zurücklegt.

2. Vorrichtung gemäß Anspruch 1, wobei die Leitung (410, 420, 430, 440) eingerichtet ist, um stufenlos veränderliche Streckenlängen einzunehmen.

3. Vorrichtung gemäß Anspruch 2, wobei die Leitung einen inneren Teil (410, 430) und einen koaxial über dem inneren Teil befindlichen äußeren Teil (420, 440) aufweist und der innere und der äußere Teil entlang ihrer gemeinsamen Achse gegeneinander beweglich sind

4. Vorrichtung gemäß Anspruch 1, wobei die Leitung (410, 420, 430, 440) eingerichtet ist, um eine Mehrzahl von diskreten Konfigurationen mit jeweils unterschiedlicher Streckenlänge einzunehmen.

5. Vorrichtung gemäß Anspruch 4, wobei die Leitung (410, 420, 430, 440) wenigstens teilweise durch ein Mehrwegeventil verläuft.

6. Verfahren zum Auftragen einer schäumbaren Reaktionsmischung auf eine sich bewegende Deckschicht, umfassend die Schritte:
- Bereitstellen einer Auftragvorrichtung, wobei die Auftragvorrichtung eine Vorrichtung gemäß einem der Ansprüche 1 bis 5 ist;
- Auswählen der schäumbaren Reaktionsmischung; wobei die Reaktionsmischung eine zeitliche Veränderung ihrer Viskosität aufweist;
- Bestimmen einer gewünschten Viskosität der Reaktionsmischung zum Zeitpunkt des Auftragens auf die Deckschicht;
- Konfigurieren der Auftragvorrichtung, so dass die Streckenlänge der Leitung mit der gewünschten Viskosität der Reaktionsmischung zum Zeitpunkt des Auftragens auf die Deckschicht korreliert;
- Bereitstellen der Reaktionsmischung in dem Mischkopf der Auftragvorrichtung;
- Bewegen der Reaktionsmischung von dem Mischkopf durch die Leitung aus das Austragselement der Auftragvorrichtung heraus auf die Deckschicht.

7. Verfahren gemäß Anspruch 6, wobei die Reaktionsmischung ≥ 20 Gewichts-% einer Komponente umfasst, welche eine bei 25 °C gemessene Viskosität (Rotationsviskosimetrie gemäß DIN 53019) von ≤ 2500 mPas aufweist.

8. Verfahren gemäß Anspruch 6 oder 7, wobei die Reaktionsmischung ein Polyol, ein Polyisocyanat und ein Treibmittel umfasst.

9. Verfahren gemäß Anspruch 8, wobei die Reaktionsmischung einen Aminkatalysator enthält und für einen vorbestimmten Wert der Viskosität der Reaktionsmischung beim Verlassen des Austragselements (500) der Gehalt des Aminkatalysators in der Reaktionsmischung für die Konfiguration der Leitung (410, 420, 430, 440) mit der längesten Streckenlänge ≤ 90% des Gehalts in der Reaktionsmischung für die Konfiguration der Leitung (410, 420, 430, 440) mit der kürzesten Streckenlänge beträgt.

10. Verfahren gemäß einem der Ansprüche 6 bis 9, wobei während des Auftragens der Reaktionsmischung die Streckenlänge der Leitung verändert wird.
